(19) Europäisches Patentamt / European Patent Office / Office européen des brevets

(11) **EP 4 345 988 A1**

(12) **EUROPEAN PATENT APPLICATION**
published in accordance with Art. 153(4) EPC

(43) Date of publication:
**03.04.2024 Bulletin 2024/14**

(21) Application number: **22868782.8**

(22) Date of filing: **27.06.2022**

(51) International Patent Classification (IPC):
**H01M 10/615** $^{(2014.01)}$

(52) Cooperative Patent Classification (CPC):
**H01M 10/615; H01M 10/625; H01M 10/63; H01M 10/654;** Y02E 60/10

(86) International application number:
**PCT/CN2022/101475**

(87) International publication number:
**WO 2023/040405 (23.03.2023 Gazette 2023/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.09.2021 CN 202111074668**

(71) Applicant: **BYD Company Limited Shenzhen, Guangdong 518118 (CN)**

(72) Inventors:
- **ZHANG, Ke**
  **Shenzhen, Guangdong 518118 (CN)**
- **CHEN, Na**
  **Shenzhen, Guangdong 518118 (CN)**
- **LI, Jiannian**
  **Shenzhen, Guangdong 518118 (CN)**
- **PAN, Yi**
  **Shenzhen, Guangdong 518118 (CN)**
- **GUO, Zizhu**
  **Shenzhen, Guangdong 518118 (CN)**

(74) Representative: **Arnold & Siedsma Bezuidenhoutseweg 57 2594 AC The Hague (NL)**

(54) **SELF-HEATING CONTROL METHOD AND SELF-HEATING CONTROL SYSTEM OF CHARGING AND DISCHARGING BATTERY**

(57) A self-heating control method and a self-heating control system for a rechargeable battery are disclosed. The rechargeable battery includes a battery cell. A separator is provided between a positive electrode and a negative electrode of the battery cell. A reference electrode is correspondingly provided at the separator. A surface electrode is correspondingly provided on the negative electrode surface of the battery cell. The method includes: detecting the potential difference between the reference electrode and the surface electrode, generating a charging current adjustment instruction according to the potential difference between the reference electrode and the surface electrode, and adjusting the charging current of the rechargeable battery according to the charging current adjustment instruction during the self-heating process of the rechargeable battery.

The potential difference between the reference electrode and the surface electrode is detected — S01

A charging current adjustment instruction is generated according to the potential difference between the reference electrode and the surface electrode, and the charging current of the rechargeable battery is adjusted according to the charging current adjustment instruction during the self-heating process of the rechargeable battery — S02

FIG. 1

## Description

## CROSS REFERENCE TO RELATED APPLICATIONS

The present disclosure claims priority to Chinese Patent Application No. 202111074668.7 filed on September 14, 2021 and Entitled "Self-heating control method and self-heating control system for rechargeable battery", which is incorporated herein by reference in its entirety.

## FIELD

The present disclosure relates to the field of batteries, and specifically to a self-heating control method for a rechargeable battery, a computer readable storage medium, a battery manager and a self-heating control system for a rechargeable battery.

## BACKGROUND

Battery is the most widely used energy storage device in the field of new energy vehicles at present. The charging and discharging capacities of the battery are greatly influenced by the temperature. The discharging capacity of a battery at a low temperature can be effectively improved by heating the battery by applying the energy from the battery itself or from the outside to individual battery cells, thus increasing the mile range.

In related art, the self-heating of the battery will cause seriously uneven heat generation of the battery. In the case of extra large-current charging, the non-uniform temperature in the battery cell will cause lithium precipitation in some areas of the battery, affecting the cycle life and safety of the battery.

## SUMMARY

The present disclosure aims to solve at least one of the technical problems in the related art. To this end, an object of the present disclosure is to provide a self-heating control method for a rechargeable battery. The self-heating control method for a rechargeable battery allows for even heating of the battery, to avoid the occurrence of lithium precipitation of the battery, and improve the cycle life and safety of the battery.

The present disclosure further provides a computer readable storage medium.

The present disclosure further provides a battery manager.

The present disclosure further provides a self-heating control system for a rechargeable battery.

In accordance with the self-heating control method for a rechargeable battery according to the present disclosure, the rechargeable battery includes a battery cell, a separator is provided between a positive electrode and a negative electrode of the battery cell, a reference electrode is correspondingly provided at the separator, and a surface electrode is correspondingly provided on the negative electrode surface of the battery cell. The method includes: detecting the potential difference between the reference electrode and the surface electrode; generating a charging current adjustment instruction according to the potential difference between the reference electrode and the surface electrode, and adjusting the charging current of the rechargeable battery according to the charging current adjustment instruction during the self-heating process of the rechargeable battery.

In accordance with the self-heating control method for a rechargeable battery according to the present disclosure, the potential difference between the reference electrode and the surface electrode is detected, then a charging current adjustment instruction is generated according to the potential difference between the reference electrode and the surface electrode, and the charging current of the rechargeable battery is adjusted according to the charging current adjustment instruction during the self-heating process of the rechargeable battery, to avoid the occurrence of lithium precipitation of the battery, and improve the cycle life and safety of the battery.

In some embodiments of the present disclosure, the step of generating a charging current adjustment instruction according to the potential difference between the reference electrode and the surface electrode includes: when the potential difference between the reference electrode and the surface electrode is less than a first potential threshold, generating the charging current adjustment instruction with a charging current amplitude of zero; when the potential difference between the reference electrode and the surface electrode is greater than or equal to the first potential threshold and less than a second potential threshold, generating a charging current adjustment instruction according to the first potential threshold, and the potential difference between the reference electrode and the surface electrode.

In some embodiments of the present disclosure, when the potential difference between the reference electrode and the surface electrode is greater than or equal to the first potential threshold and less than the second potential threshold, the charging current amplitude corresponding to the charging current adjustment instruction is determined by a formula below:

$$I\_dc = I\_dc0 * f(s1)*(VN - E\_plating),$$

where s1 is a first safety parameter, f(s1) is a function of s1, I_dc is the charging current amplitude, I_dc0 is the initial charging current amplitude, VN is the potential difference between the reference electrode and the surface electrode, and E_plating is the first potential threshold.

In some embodiments of the present disclosure, the first potential threshold is determined by detecting the potential difference between the negative electrode of the battery cell and the reference electrode; acquiring a potential curve of the negative electrode at different charging rates according to the potential difference between the negative electrode of the battery cell and the reference electrode, and acquiring the relation between the lithium precipitation potential and the charging rate according to the potential curve of the negative electrode at different charging rates; and determining the first potential threshold according to the relation between the lithium precipitation potential and the charging rate.

In some embodiments of the present disclosure, when the potential difference between the reference electrode and the surface electrode is less than the first potential threshold, the method further includes: detecting the potential difference between the positive electrode of the battery cell and the reference electrode; and generating a battery heating current adjustment instruction according to the potential difference between the positive electrode of the battery cell and the reference electrode, and adjusting the heating current amplitude of the rechargeable battery according to the battery heating current adjustment instruction during the self-heating process of the rechargeable battery.

In some embodiments of the present disclosure, the step of generating a battery heating current adjustment instruction according to the potential difference between the positive electrode of the battery cell and the reference electrode, includes: when the potential difference between the positive electrode of the battery cell and the reference electrode is greater than a third potential threshold, generating a battery heating current adjustment instruction with a heating current amplitude of zero; and when the potential difference between the positive electrode of the battery cell and the reference electrode is greater than a fourth potential threshold and less than or equal to the third potential threshold, generating a battery heating current adjustment instruction according to the third potential threshold, and the potential difference between the positive electrode of the battery cell and the reference electrode.

In some embodiments of the present disclosure, when the potential difference between the positive electrode of the battery cell and the reference electrode is greater than the fourth potential threshold and less than or equal to the third potential threshold, the heating current amplitude corresponding to the battery heating current adjustment instruction is determined by a formula below:

$$I\_ac = I\_ac0 * f(s2)*(VP - E\_max),$$

where s2 is a second safety parameter, f(s2) is a function of s2, 1_ac is the heating current amplitude, I_ac0 is the initial heating current amplitude, VP is the potential difference between the positive electrode of the battery cell and the reference electrode, and E_max is the third potential threshold.

In accordance with the computer readable storage medium according to the present disclosure, a self-heating control program for a rechargeable battery is stored thereon. The self-heating control program for a rechargeable battery, when executed by a processor, implements the self-heating control method for a rechargeable battery as described above.

In accordance with the computer readable storage medium according to the present disclosure, the potential difference between the reference electrode and the surface electrode is detected, a charging current adjustment instruction is generated according to the potential difference between the reference electrode and the surface electrode, and the charging current of the rechargeable battery is adjusted according to the charging current adjustment instruction during the self-heating process of the rechargeable battery. This allows for even heating of the battery, so as to avoid the occurrence of lithium precipitation of the battery, and improve the cycle life and safety of the battery.

The battery manager according to the present disclosure includes a memory, a processor and a self-heating control program for a rechargeable battery stored on the memory and able to run on the processor. The self-heating control program for a rechargeable battery, when executed by the processor, implements the self-heating control method for a rechargeable battery as described above.

The battery manager according to the present disclosure allows for even heating of the battery, so as to avoid the occurrence of lithium precipitation of the battery, and improve the cycle life and safety of the battery.

The self-heating control system for a rechargeable battery according to the present disclosure includes a reference electrode, correspondingly provided at a separator between a positive electrode and a negative electrode in a battery cell of the rechargeable battery; a surface electrode, correspondingly provided at the negative electrode surface of the battery cell; and a battery manager, connected respectively to the reference electrode and the surface electrode, and configured to detect the potential difference between the reference electrode and the surface electrode; and generate a charging current adjustment instruction according to the potential difference between the reference electrode and the surface electrode, and so as to adjust the charging current of the rechargeable battery according to the charging current adjustment instruction during the self-heating process of the rechargeable battery.

The self-heating control system for a rechargeable battery according to the present disclosure allows for even heating of the battery, so as to avoid the occurrence of lithium precipitation of the battery, and improve the cycle life and safety of the battery.

In some embodiments of the present disclosure, the reference electrode is electronically insulated from, but ionically conductive with the positive electrode and the negative electrode of the battery cell, and the surface electrode is in direct contact and electronic conduction with the negative electrode of the battery cell.

Additional aspects and advantages of the present disclosure will be partly given in the following description, some of which will become apparent from the following description, or may be learned from practices of the present disclosure.

## BRIEF DESCRIPTION OF THE DRAWINGS

The above and/or other additional aspects and advantages of the present disclosure will become apparent and comprehensible from the description of embodiments in connection with accompanying drawings, in which:

> FIG. 1 is a flow chart of a self-heating control method according to an embodiment of the present disclosure;
> FIG. 2 is a cross-sectional view of a battery cell according to an embodiment of the present disclosure;
> FIG. 3 is a schematic diagram showing the cooperation of a positive electrode, a negative electrode, a separator, a reference electrode and a surface electrode according to an embodiment of the present disclosure;
> FIG. 4 is a schematic structural view of a self-heating control system for a rechargeable battery according to an embodiment of the present disclosure;
> FIG. 5 is a schematic view of a battery cell having electrode lead-outs according to an embodiment of the present disclosure;
> FIG. 6 is a schematic view showing the connection of a battery cell, a battery manager and an insulate-gate bipolar transistor according to an embodiment of the present disclosure; and
> FIG. 7 is a schematic block diagram of a processor, a memory, a communication interface, and a communication bus according to an embodiment of the present disclosure.

List of reference numerals:

> 10 reference electrode;
> 20 surface electrode;
> 30 battery manager;
> 40 battery cell; 41 positive electrode; 42 negative electrode; 43 separator; 44 positive electrode tab; 45 negative electrode tab;
> 50 insulate-gate bipolar transistor;
> 1201 processor; 1202 communication interface; 1203 memory; 1204 communication bus.

## DETAILED DESCRIPTION

Embodiments of the present disclosure will be described in detail below, and examples of the embodiments are shown in accompanying drawings, where the same or similar elements or the elements having the same or similar functions are denoted by the same or similar reference numerals throughout the description. The embodiments described below with reference to the accompanying drawings are exemplary and merely intended to explain the present disclosure, and cannot be construed as a limitation on the present disclosure.

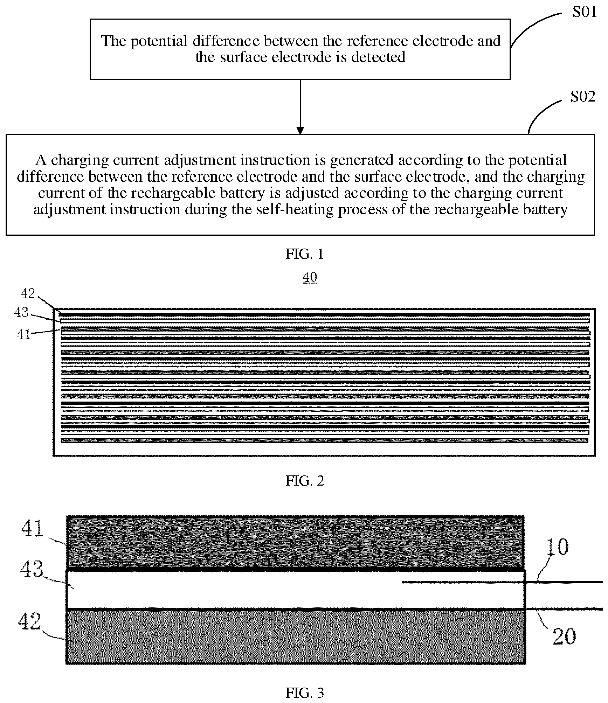

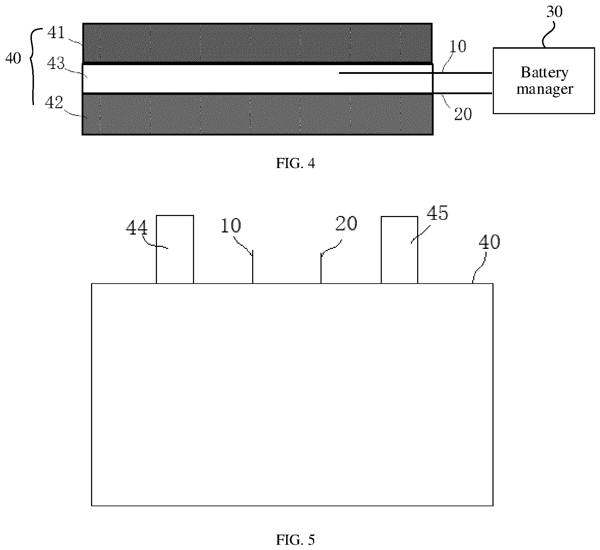

A self-heating control method for a rechargeable battery according to an embodiment of the present disclosure will be described below with reference to FIG. 1 to FIG. 7.

As shown in FIG. 1 to FIG. 7, in accordance with the self-heating control method for a rechargeable battery according to the embodiment of the present disclosure, the rechargeable battery includes a battery cell, a separator is provided between a positive electrode and a negative electrode of the battery cell, a reference electrode is correspondingly provided at the separator, and a surface electrode is correspondingly provided on the negative electrode surface of the battery cell. The reference electrode is electronically insulated from, but ionically conductive with the positive electrode and the negative electrode of the battery cell, and the surface electrode is in direct contact with the negative electrode of the battery cell, and acts as a stabilizing electrode to output a stable reference potential. Further, the reference electrode can be made of copper, aluminum, lithium, lithium iron phosphate, graphene carbon nanotubes, silver, silver chloride, and other materials. However, the present disclosure is not limited thereto. The reference electrode can also be made of materials having the same functions as those described above. Further, the surface electrode is in direct contact with the negative electrode, so as to establish an electronic contact channel. The surface electrode is not limited to metallic or nonmetallic conductors, and the surface electrode can also be made of graphene, carbon nanotubes, a carbon-based two-dimensional materials or other materials with good electronic conductivity.

The self-heating control method according to the embodiment of the present disclosure includes the following steps:

S01: The potential difference between the reference electrode and the surface electrode is detected.

Notably, a battery manager is connected respectively to the reference electrode and the surface electrode, and the battery manager is configured to detect the potential difference between the reference electrode and the surface electrode. Further, the battery manager can detect the potential difference between the reference electrode and the surface electrode located at various positions of the battery cell.

S02: A charging current adjustment instruction is generated according to the potential difference between the reference electrode and the surface electrode, and the charging current of the rechargeable battery is adjusted according to the charging current adjustment instruction during the self-heating process of the rechargeable battery.

Notably, the battery manager can generate a charging current adjustment instruction according to the potential difference between the reference electrode and the surface electrode, so that the battery manager can adjust the charging current of the rechargeable battery according to the charging current adjustment instruction during the self-heating process of the rechargeable battery,

Particularly, after detecting the potential difference between the reference electrode and the surface electrode, the battery manager generates a charging current adjustment instruction according to the potential difference between the reference electrode and the surface electrode, and the battery manager adjusts the charging current of the rechargeable battery according to the charging current adjustment instruction during the self-heating process of the rechargeable battery, Preset data can be stored in the battery manager. After detecting the potential difference between the reference electrode and the surface electrode, the battery manager compares it with the preset data, and then the battery manager generates a charging current adjustment instruction, and adjusts the charging current of the rechargeable battery according to the charging current adjustment instruction during the self-heating process of the rechargeable battery, so that the charging current of the rechargeable battery can be dynamically adjusted. This prevents the damage to the positive electrode active material of the battery and lithium precipitation of the negative electrode active material potentially caused by the self-heating current of large magnitude, so as to avoid the occurrence of lithium precipitation of the battery, and improve the cycle life and safety of the battery.

Therefore, the self-heating control method for a rechargeable battery allows for even heating of the battery, so as to avoid the occurrence of lithium precipitation of the battery, and improve the cycle life and safety of the battery.

In some embodiments of the present disclosure, the step of generating a charging current adjustment instruction according to the potential difference between the reference electrode and the surface electrode includes: when the potential difference between the reference electrode and the surface electrode is less than a first potential threshold, the battery manager generates a charging current adjustment instruction with a charging current amplitude of zero. When the reference electrode and the surface electrode are located at various positions of the battery cell, the battery manager can detect multiple potential differences. When any one of the multiple potential differences is less than the first potential threshold, the battery manager generates a charging current adjustment instruction with a charging current amplitude of zero. During the self-heating process of the rechargeable battery, when the charging current amplitude is zero, thermodynamically, lithium precipitation is impossible for the rechargeable battery. When the potential difference between the reference electrode and the surface electrode is less than the first potential threshold, a charging current adjustment instruction with a charging current amplitude of zero is generated, and the charging current of the rechargeable battery is adjusted, to adjust the charging current of the rechargeable battery to zero and actively reduce the charging current of the rechargeable battery, thereby avoiding the occurrence of lithium precipitation of the rechargeable battery.

Further, when the potential difference between the reference electrode and the surface electrode is greater than or equal to the first potential threshold and less than a second potential threshold, a charging current adjustment instruction is generated according to the first potential threshold, and the potential difference between the reference electrode and the surface electrode, so as to avoid the occurrence of lithium precipitation of the rechargeable battery. When the reference electrode and the surface electrode are located at various positions of the battery cell, the battery manager can detect multiple potential differences. When any one of the multiple potential differences is greater than or equal to the first potential threshold and less than the second potential threshold, a charging current adjustment instruction is generated according to the first potential threshold, and the potential difference between the reference electrode and the surface electrode, so as to avoid the occurrence of lithium precipitation of the rechargeable battery.

Further, when the potential difference between the reference electrode and the surface electrode is greater than or equal to the first potential threshold and less than the second potential threshold, the charging current amplitude corresponding to the charging current adjustment instruction is determined by a formula below:

$$I\_dc = I\_dc0 * f(s1)*(VN - E\_plating),$$

where s1 is a first safety parameter, f(s1) is a function of s1, I_dc is the charging current amplitude, I_dc0 is the initial charging current amplitude, VN is the potential difference between the reference electrode and the surface electrode, and E_plating is the first potential threshold. Notably, f(s1) is a function of s1, having a value between 0-10, and can be set to a fixed value according to previous experiments, or determined by a look-up table method. f(s1) depends on the intrinsic charging and discharging capacity of the rechargeable battery. The specific value is determined by experiments during the strategy test, and can be a fixed value or a function. f(s1) indicates a general tendency that for a rechargeable battery with a good charging and discharging capacity, the value of f(s1) is large, and for a rechargeable battery with a poor charging and discharging capacity, the value of f(s1) is small. During the self-heating process of the rechargeable battery, by determining the charging current amplitude corresponding to the charging current adjustment instruction by the formula above, the occurrence of lithium precipitation of the rechargeable battery during the charging process can be effectively avoided, thereby further improving the cycle life and safety of the battery.

In some embodiments of the present disclosure, the first potential threshold is determined by: detecting the potential difference between the negative electrode of the battery cell and the reference electrode, and further, detecting the potential difference between the reference electrode and all of the negative electrodes; acquiring a potential curve of the negative electrode at different charging rates according to the potential difference between the negative electrode of the battery cell and the reference electrode, and acquiring the relation between the lithium precipitation potential and the charging rate according to the potential curve of the negative electrode at different charging rates; and determining the first potential threshold according to the relation between the lithium precipitation potential and the charging rate. Through such an arrangement, the first potential threshold can be accurately determined, and the occurrence of lithium precipitation of the rechargeable battery during the charging process can be effectively avoided, thereby further improving the cycle life and safety of the battery.

In some embodiments of the present disclosure, when the potential difference between the reference electrode and the surface electrode is greater than or equal to the second potential threshold, no heating control is performed on the rechargeable battery, and the charging current of the rechargeable battery is adjusted with the adjustment of the vehicle controller. Through such an arrangement, the occurrence of lithium precipitation of the rechargeable battery during the charging process can be effectively avoided, thereby further improving the cycle life and safety of the battery.

In some embodiments of the present disclosure, when the potential difference between the reference electrode and the surface electrode is less than the first potential threshold, the self-heating control method can further include:

> S 10: The potential difference between the positive electrode of the battery cell and the reference electrode is detected. The potential difference between the positive electrode of the battery cell and the reference electrode can be detected by the battery manager.
> S20: A battery heating current adjustment instruction is generated according to the potential difference between the positive electrode of the battery cell and the reference electrode, and the heating current amplitude of the rechargeable battery is adjusted according to the battery heating current adjustment instruction during the self-heating process of the rechargeable battery. The battery manager can generate a battery heating current adjustment instruction according to the potential difference between the positive electrode of the battery cell and the reference electrode, so that the battery manager can adjust the heating current amplitude of the rechargeable battery according to the battery heating current adjustment instruction during the self-heating process of the rechargeable battery.

Particularly, after the potential difference between the positive electrode of the battery cell and the reference electrode is detected by the battery manager, the battery manager generates a battery heating current adjustment instruction according to the potential difference between the positive electrode of the battery cell and the reference electrode, so that the battery manager can adjust the heating current amplitude of the rechargeable battery according to the battery heating current adjustment instruction during the self-heating process of the rechargeable battery. Preset data can be stored in the battery manager. After the potential difference between the positive electrode of the battery cell and the reference electrode is detected by the battery manager, the battery manager compares it with the preset data, and then the battery manager generates a battery heating current adjustment instruction, and adjusts the heating current amplitude of the rechargeable battery according to the battery heating current adjustment instruction during the self-heating process of the rechargeable battery, so that the heating current amplitude of the rechargeable battery can be dynamically adjusted. This allows for even heating of the rechargeable battery, and prevents the damage to the positive electrode active material of the rechargeable battery caused by the heating current of large magnitude, thereby further improving the cycle life and safety of the battery.

In some embodiments of the present disclosure, the step of generating a battery heating current adjustment instruction according to the potential difference between the positive electrode of the battery cell and the reference electrode includes: when the potential difference between the positive electrode of the battery cell and the reference electrode is greater than a third potential threshold, generating a battery heating current adjustment instruction with a heating current amplitude of zero. When the reference electrode and the surface electrode are located at various positions of the battery cell, the battery manager can detect multiple potential differences. When any one of the multiple potential differences is greater than the third potential threshold, a battery heating current adjustment instruction with a heating current amplitude of zero is generated. During the self-heating process of the rechargeable battery, when the potential difference between the positive electrode of the battery cell and the reference electrode is greater than the third potential threshold, a battery heating current adjustment instruction with a heating current amplitude of zero is generated, the battery heating current of the rechargeable battery is adjusted, to adjust the battery heating current of the rechargeable battery to zero and actively reduce the battery heating current of the rechargeable battery, thereby further avoiding the damage to the positive electrode active material of the rechargeable battery caused by the heating current of large magnitude. This allows for even heating of the rechargeable battery, thereby further improving the cycle life and safety of the battery.

When the potential difference between the positive electrode of the battery cell and the reference electrode is greater than a fourth potential threshold and less than or equal to the third potential threshold, a battery heating current adjustment instruction is generated according to the third potential threshold, and the potential difference between the positive electrode of the battery cell and the reference electrode. When the reference electrode and the surface electrode are located at various positions of the battery cell, the battery manager can detect multiple potential differences. When any one of the multiple potential differences is greater than the fourth potential threshold and less than or equal to the third potential threshold, a battery heating current adjustment instruction is generated according to the third potential threshold, and the potential difference between the positive electrode of the battery cell and the reference electrode.

In some embodiments of the present disclosure, when the potential difference between the positive electrode of the battery cell and the reference electrode is greater than the fourth potential threshold and less than or equal to the third potential threshold, or when any one of the multiple potential differences is greater than the fourth potential threshold and less than or equal to the third potential threshold, the heating current amplitude corresponding to the battery heating current adjustment instruction is determined by a formula below:

$$I\_ac = I\_ac0 * f(s2)*(VP - E\_max),$$

where s2 is a second safety parameter, f(s2) is a function of s2, 1_ac is the heating current amplitude, I_ac0 is the initial heating current amplitude, VP is the potential difference between the positive electrode of the battery cell and the reference electrode, and E_max is the third potential threshold.

Notably, according to the safety requirement, f(s2) is a function of s2, having a value between 0-10, and can be set to a fixed value according to previous experiments, or determined by a look-up table method. During the self-heating process of the rechargeable battery, the heating current amplitude of the rechargeable battery is determined by the above formula according to the battery heating current adjustment instruction. This allows for even heating of the rechargeable battery, and further avoids the damage to the positive electrode active material of the rechargeable battery caused by the heating current of large magnitude, thereby further improving the cycle life and safety of the battery.

In accordance with the computer readable storage medium according to the embodiment of the present disclosure, a self-heating control program for a rechargeable battery is stored thereon. The self-heating control program for a rechargeable battery, when executed by a processor, implements the self-heating control method for a rechargeable battery according to the above embodiment.

In accordance with the computer readable storage medium according to the embodiment of the present disclosure, the potential difference between the reference electrode and the surface electrode is detected, a charging current adjustment instruction is generated according to the potential difference between the reference electrode and the surface electrode, and the charging current of the rechargeable battery is adjusted according to the charging current adjustment instruction during the self-heating process of the rechargeable battery. This allows for even heating of the battery, so as to avoid the occurrence of lithium precipitation of the battery, and improve the cycle life and safety of the battery.

A battery manager 30 according to an embodiment of the present disclosure includes a memory 1203, a processor 1201 and a self-heating control program for a rechargeable battery stored on the memory 1203 and able to run on the processor 1201. The self-heating control program for a rechargeable battery, when executed by the processor 1201, implements the self-heating control method for a rechargeable battery according to the above embodiment.

In accordance with the battery manager 30 according to the embodiment of the present disclosure, by executing the self-heating control program for a rechargeable battery stored on the memory 1203 by the processor 1201, the charging current of the rechargeable battery is adjusted according to the charging current adjustment instruction during the self-heating process of the rechargeable battery. This allows for even heating of the battery, so as to avoid the occurrence of lithium precipitation of the battery, and improve the cycle life and safety of the battery.

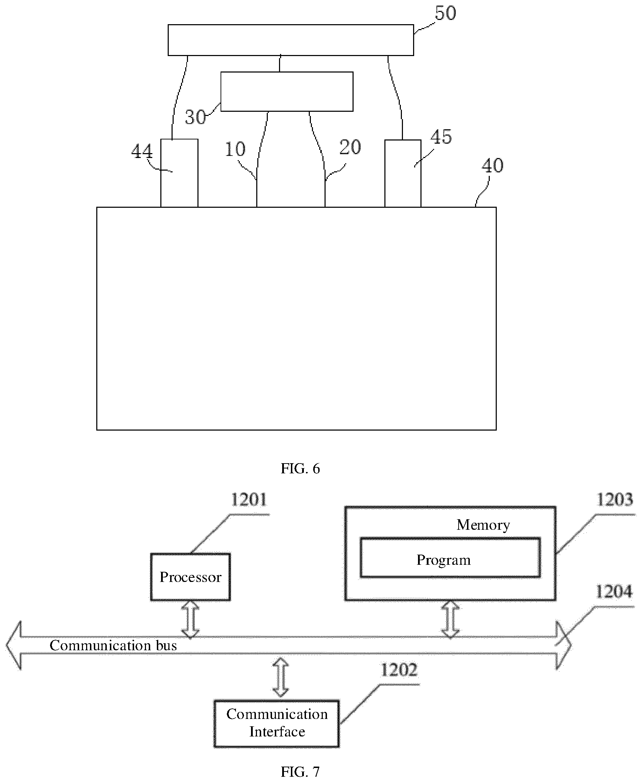

As shown in FIG. 7, the battery manager 30 includes at least one processor 1201, at least one communication interface 1202, at least one memory 1203 and at least one communication bus 1204. In an embodiment of the present disclosure, the number of the processor 1201, the communication interface 1202, the storage 1203, and the communication bus 1204 is at least one; and the processor 1201, the communication interface 1202, and the storage 1203 communicate with one another via the communication bus 1204.

The memory 1203 can be, but is not limited to, a random access memory (RAM), a read only memory (ROM), a programmable read-only memory (PROM), an erasable programmable read-only memory (EPROM), or an electric erasable programmable read-only memory (EEPROM), etc. The memory 1203 is configured to store a program. After receiving an execution instruction, the processor 1201 executes the program, to implement the steps of the control method for an air conditioner according to the above embodiment.

The processor 1201 may be an integrated circuit chip, and has a signal processing capability. The processor can be a general-purpose processor, including a central processing unit (CPU), and a network processor (NP) etc.; or a digital signal processors (DSP), an application specific integrated circuits (ASIC), a field programmable gate array (FPGA) or other programmable logic devices, a discrete gate or transistor logic device, and a discrete hardware assembly. It may implement or perform the methods, the steps, and logic block diagrams that are disclosed in the embodiments of the present disclosure. The general-purpose processor can be a micro processor or any conventional processors.

Notably, The logic and/or steps shown in the flowcharts or described otherwise herein, for example, a sequenced list that may be considered as executable instructions used for implementing logical functions, may be specifically implemented in any computer-readable medium, for use by an instruction execution system, apparatus, or device (for example, a computer-based system, a system including a processor, or other systems that can obtain an instruction from the instruction execution system, apparatus or device and execute the instruction), or for use with such instruction execution systems, apparatuses, or devices. In the specification, the "computer-readable medium" may be any apparatus that can include, store, communicate, propagate, or transmit programs for use by an instruction execution system, apparatus or device or for use with the instruction execution system apparatus or device. More specific examples (a non-exhaustive list) of the computer-readable medium include: an electrical connection (electronic device) having one or more wires, a portable computer diskette (magnetic apparatus), a random access memory (RAM), a read-only memory (ROM), an erasable programmable read-only memory (EPROM or flash memory), an optical fiber apparatus, and a portable compact disk read-only memory (CDROM). In addition, the computer-readable medium can even be paper or other suitable media on which the program can be printed, because the program can be obtained electronically by, for example, optically scanning paper or other media, then editing, deciphering, or processing in other suitable ways if necessary, and then storing it in a computer memory.

It should be understood that parts of the present disclosure can be implemented by hardware, software, firmware, or a combination thereof. In the foregoing implementations, steps or methods can be implemented by software or firmware that is stored in a memory and executed by a proper instruction execution system. For example, if hardware is used for implementation, same as in another implementation, implementation may be performed by any one of the following technologies well known in the art or a combination thereof: a discrete logic circuit including a logic gate circuit for implementing a logic function of a data signal, a dedicated integrated circuit including a proper combination of logic gate circuits, a programmable gate array (PGA), a field programmable gate array (FPGA), and the like.

As shown in FIG. 1 to FIG. 6, in accordance with the self-heating control system for a rechargeable battery according to the present disclosure, the self-heating control system can implement the self-heating control method for a rechargeable battery according to the above embodiment. The self-heating control system includes: a reference electrode 10, a surface electrode 20 and a battery manager 30. The reference electrode 10 is correspondingly provided at a separator 43 between a positive electrode 41 and a negative electrode 42 in a battery cell 40 of the rechargeable battery, and the surface electrode 20 is correspondingly provided at the surface of the negative electrode 42 of the battery cell 40. Further, the reference electrode 10 can be made of copper, aluminum, lithium, lithium iron phosphate, graphene carbon nanotubes, silver, silver chloride, and other materials. However, the present disclosure is not limited thereto. The reference electrode 10 can also be made of materials having the same functions as those described above. Further, the surface electrode 20 is in direct contact with the negative electrode 42, so as to establish an electronic contact channel. The surface electrode 20 is not limited to metallic or nonmetallic conductors, and the surface electrode 20 can also be made of graphene, carbon nanotubes, a carbon-based two-dimensional materials or other materials with good electronic conductivity.

The battery manager 30 is a battery manager 30 according to the above embodiment. The battery manager 30 is respectively connected to the reference electrode 10 and the surface electrode 20. The battery manager 30 is configured to detect the potential difference between the reference electrode 10 and the surface electrode 20; and generate a charging current adjustment instruction according to the potential difference between the reference electrode 10 and the surface electrode 20, and adjust the charging current of the rechargeable battery according to the charging current adjustment instruction during the self-heating process of the rechargeable battery. Further, the battery manager can detect the potential difference between the reference electrode and the surface electrode located at various positions of the battery cell.

Particularly, after detecting the potential difference between the reference electrode 10 and the surface electrode 20, the battery manager 30 generates a charging current adjustment instruction according to the potential difference between the reference electrode 10 and the surface electrode 20, and the battery manager 30 adjusts the charging current of the rechargeable battery according to the charging current adjustment instruction during the self-heating process of the rechargeable battery. Preset data can be stored in the battery manager 30. After detecting the potential difference between the reference electrode 10 and the surface electrode 20, the battery manager 30 compares it with the preset data, and then the battery manager 30 generates a charging current adjustment instruction, and adjusts the charging current of the rechargeable battery according to the charging current adjustment instruction during the self-heating process of the rechargeable battery, so that the charging current of the rechargeable battery can be dynamically adjusted. This prevents the damage to the active material of the positive electrode 41 of the battery and lithium precipitation of the active material of the negative electrode 42 potentially caused by the self-heating current of large magnitude, so as to avoid the occurrence of lithium precipitation of the battery, and improve the cycle life and safety of the battery.

In some embodiments of the present disclosure, the reference electrode 10 is electronically insulated from, but ionically conductive with the positive electrode 41 and the negative electrode 42 of the battery cell 40, and the surface electrode 20 is in direct contact with the negative electrode 42 of the battery cell 40, and acts as a stabilizing electrode to output a stable reference potential.

In some embodiments of the present disclosure, multiple battery cells 40 can be provided in the rechargeable battery, multiple reference electrodes 10 and multiple surface electrodes 20 can be provided in at least one battery cell 40, and the surface electrode 20 is in direct contact with the negative electrode 42, so as to establish an electronic contact channel, to probe local surface potential of the battery cell 40.

In some embodiments of the present disclosure, the battery cell 40 may be provided with a lead-out portion, for leading out the surface electrode 20 and the reference electrode 10. As a result, the surface electrode 20 and the reference electrode 10 can be connected to the battery manager 30, bringing convenience to the detection of the potential difference between the reference electrode 10 and the surface electrode 20 by the battery manager 30.

In some embodiments of the present disclosure, the positions for placing the reference electrode 10 and the surface electrode 20 generally follow the principle of maximum temperature difference. The reference electrode 10 and the surface electrode 20 are usually placed in a battery cell 40 having the maximum temperature difference in the rechargeable battery. Further, the reference electrode 10 and the surface electrode 20 can be provided at a middle position in the battery cell 40. However, the present disclosure is not limited thereto. The reference electrode 10 and the surface electrode 20 can also be provided in the battery cell 40 at a distal position away from an external heat source, or the reference electrode 10 and the surface electrode 20 can also be provided at a bottom position of the battery cell 40. With this arrangement, the positions of the reference electrode 10 and the surface electrode 20 are reasonable, so as to avoid the occurrence of lithium precipitation of the battery, allow for even heating of the rechargeable battery, and improve the cycle life and safety of the battery.

In some embodiments of the present disclosure, the self-heating control system can include an insulate-gate bipolar transistor. The insulate-gate bipolar transistor can output heating current signals with different frequencies and amplitudes in real time according to the external input. The insulate-gate bipolar transistor can be connected to the battery manager 30. The insulate-gate bipolar transistor may also be connected to a positive electrode tab 44 and a negative electrode tab 45 of the battery cell 40. The battery manager 30 dynamically adjusts the frequency or current amplitude outputted from the insulate-gate bipolar transistor to the battery cell 40 according to a preset strategy.

In the present disclosure, by detecting the potential differences between the negative electrode 42 and the reference electrode 10 and between the positive electrode 41 and the reference electrode 10 by the battery manager 30, the damage to the active material of the positive electrode 41 of the battery and lithium precipitation of the active material of the negative electrode 42 potentially caused by the self-heating current of large magnitude can be prevented, ensuring that the cycle life and safety performance of battery cell 40 are not affected. Moreover, by providing the reference electrode 10 and the surface electrode 20, local potential distribution in the battery cell 40 can be detected during the self-heating process.

Notably, one of the most serious problems encountered in the self-heating technology is that since the frequency of self-heating is usually high, the impedance of electrons in a metal conductor (current collector) is mainly used. The current density in the battery cell 40 usually has a gradient distribution along the current collector direction. Based on the ohmic heat generation formula, the heat generation of the current collector of the battery can be expressed as $Q = I^2 * R$. Therefore, the heat generation is serious at a position close to the lead-out portion of the battery cell 40, causing uneven heating at a low temperature. The temperature difference between the cold end and the hot end can be up to 30-50°C. Therefore, the dynamically detecting of the local potential of the battery cell 40, particularly, the local potential detected by placing the reference electrode 10 and the surface electrode 20 in the battery cell 40 at a middle position prone to lithium precipitation and a bottom position away from the heat source, is of great significance for detecting whether the current self-heating condition has significant risks.

The reference electrode 10 can output a stable standard potential which is not affected by the local potential, and the surface electrode 20 can output a varying surface potential that directly reflects the local potential. By detecting the potential difference between the negative electrode 42 and the reference electrode 10, the battery cell 40 can be prevented from lithium precipitation. By detecting the potential difference between the positive electrode 41 and the reference electrode 10, the damage to the active material of the positive electrode 41 of the battery potentially caused by the self-heating current of large amplitude can be prevented. When the potential of the positive electrode 41 is detected to be higher or lower than a preset interval, the self-heating amplitude is automatically reduced, until the detected signal is lower than a preset threshold.

Reference electrode 10: It is generally prepared from a material with stably paired electrochemical reactions, has a potential that is generally not affected by the surrounding environment and state, can be used to output a stable reference potential.

Surface electrode 20: The surface electrode 20 in the present disclosure particularly refers to a conductor with electronic conductivity. After it comes into contact with the active material of the positive electrode 41 or the negative electrode 42, the potential will automatically keep consistent with the Fermi level of the positive electrode 41 or the negative electrode 42, so as to dynamically detect the electrochemical potential of the active material.

In some embodiments of the present disclosure, the step of generating a charging current adjustment instruction according to the potential difference between the reference electrode 10 and the surface electrode 20 includes: when the potential difference between the reference electrode 10 and the surface electrode 20 is less than a first potential threshold, generating a charging current adjustment instruction with a charging current amplitude of zero by the battery manager 30. When the reference electrode 10 and the surface electrode 20 are located at various positions of the battery cell 40, the battery manager 30 can detect multiple potential differences. When any one of the multiple potential differences is less than the first potential threshold, a charging current adjustment instruction with a charging current amplitude of zero is generated by the battery manager 30. During the self-heating process of the rechargeable battery, when the charging current amplitude is zero, thermodynamically, lithium precipitation is impossible for the rechargeable battery. When the potential difference between the reference electrode 10 and the surface electrode 20 is less than the first potential threshold, a charging current adjustment instruction with a charging current amplitude of zero is generated, and the charging current of the rechargeable battery is adjusted, to adjust the charging current of the rechargeable battery to zero and actively reduce the charging current of the rechargeable battery, thereby avoiding the occurrence of lithium precipitation of the rechargeable battery.

Further, when the potential difference between the reference electrode 10 and the surface electrode 20 is greater than or equal to the first potential threshold and less than a second potential threshold, a charging current adjustment instruction is generated according to the first potential threshold, and the potential difference between the reference electrode 10 and the surface electrode 20, so as to avoid the occurrence of lithium precipitation of the rechargeable battery. When the reference electrode 10 and the surface electrode 20 are located at various positions of the battery cell 40, the battery manager 30 can detect multiple potential differences. When any one of the multiple potential differences is greater than or equal to the first potential threshold and less than the second potential threshold, a charging current adjustment instruction is generated according to the first potential threshold, and the potential difference between the reference electrode 10 and the surface electrode 20, so as to avoid the occurrence of lithium precipitation of the rechargeable battery.

Further, when the potential difference between the reference electrode 10 and the surface electrode 20 is greater than or equal to the first potential threshold and less than the second potential threshold, the charging current amplitude corresponding to the charging current adjustment instruction is determined by a formula below:

$$I\_dc = I\_dc0 * f(s1)*(VN - E\_plating),$$

where s1 is a first safety parameter, f(s1) is a function of s1, I_dc is the charging current amplitude, I_dc0 is the initial charging current amplitude, VN is the potential difference between the reference electrode 10 and the surface electrode 20, and E_plating is the first potential threshold. Notably, f(s1) is a function of s1, having a value between 0-10, and can be set to a fixed value according to previous experiments, or determined by a look-up table method. f(s1) depends on the intrinsic charging and discharging capacity of the rechargeable battery. The specific value is determined by experiments during the strategy test, and can be a fixed value or a function. f(s1) indicates a general tendency that for a rechargeable battery with a good charging and discharging capacity, the value of f(s1) is large, and for a rechargeable battery with a poor charging and discharging capacity, the value of f(s1) is small. During the self-heating process of the rechargeable battery, by determining the charging current amplitude corresponding to the charging current adjustment instruction by the formula above, the occurrence of lithium precipitation of the rechargeable battery during the charging process can be effectively avoided, thereby further improving the cycle life and safety of the battery.

In some embodiments of the present disclosure, the first potential threshold is determined by: detecting the potential difference between the negative electrode 42 of the battery cell 40 and the reference electrode 10, and further, detecting the potential difference between the reference electrode 10 and all of the negative electrodes 42; acquiring a potential curve of the negative electrode 42 at different charging rates according to the potential difference between the negative electrode 42 of the battery cell 40 and the reference electrode 10, and acquiring the relation between the lithium precipitation potential and the charging rate according to the potential curve of the negative electrode 42 at different charging rates; and determining the first potential threshold according to the relation between the lithium precipitation potential and the charging rate. Through such an arrangement, the first potential threshold can be accurately determined, and the occurrence of lithium precipitation of the rechargeable battery during the charging process can be effectively avoided, thereby further improving the cycle life and safety of the battery.

In some embodiments of the present disclosure, when the potential difference between the reference electrode 10 and the surface electrode 20 is greater than or equal to the second potential threshold, no heating control is performed on the rechargeable battery, and the charging current of the rechargeable battery is adjusted with the adjustment of the vehicle controller. Through such an arrangement, the occurrence of lithium precipitation of the rechargeable battery during the charging process can be effectively avoided, thereby further improving the cycle life and safety of the battery.

In some embodiments of the present disclosure, when the potential difference between the reference electrode 10 and the surface electrode 20 is less than the first potential threshold, the self-heating control method can further include:

S 10: The potential difference between the positive electrode 41 of the battery cell 40 and the reference electrode 10 is detected. The potential difference between the positive electrode 41 of the battery cell 40 and the reference electrode 10 can be detected by the battery manager 30.

S20: A battery heating current adjustment instruction is generated according to the potential difference between the positive electrode 41 of the battery cell 40 and the reference electrode 10, and the heating current amplitude of the rechargeable battery is adjusted according to the battery heating current adjustment instruction during the self-heating process of the rechargeable battery. The battery manager 30 can generate a battery heating current adjustment instruction according to the potential difference between the positive electrode 41 of the battery cell 40 and the reference electrode 10, so that the battery manager 30 can adjust the heating current amplitude of the rechargeable battery according to the battery heating current adjustment instruction during the self-heating process of the rechargeable battery.

Particularly, after the potential difference between the positive electrode 41 of the battery cell 40 and the reference electrode 10 is detected by the battery manager 30, the battery manager 30 generates a battery heating current adjustment instruction according to the potential difference between the positive electrode 41 of the battery cell 40 and the reference electrode 10, so that the battery manager 30 can adjust the heating current amplitude of the rechargeable battery according to the battery heating current adjustment instruction during the self-heating process of the rechargeable battery. Preset data can be stored in the battery manager 30. After detecting the potential difference between the positive electrode 41 of the battery cell 40 and the reference electrode 10, the battery manager 30 compares it with the preset data, and then the battery manager 30 generates a battery heating current adjustment instruction, and adjusts the heating current amplitude of the rechargeable battery according to the battery heating current adjustment instruction during the self-heating process of the rechargeable battery, so that the heating current amplitude of the rechargeable battery can be dynamically adjusted. This allows for even heating of the rechargeable battery, and prevents the damage to the active material of the positive electrode 41 of the rechargeable battery caused by the heating current of large magnitude, thereby further improving the cycle life and safety of the battery.

In some embodiments of the present disclosure, the step of generating a battery heating current adjustment instruction according to the potential difference between the positive electrode 41 of the battery cell 40 and the reference electrode 10 includes: when the potential difference between the positive electrode 41 of the battery cell 40 and the reference electrode 10 is greater than a third potential threshold, generating a battery heating current adjustment instruction with a heating current amplitude of zero. When the reference electrode 10 and the surface electrode 20 are located at various positions of the battery cell 40, the battery manager 30 can detect multiple potential differences. When any one of the multiple potential differences is greater than the third potential threshold, a battery heating current adjustment instruction with a heating current amplitude of zero is generated. During the self-heating process of the rechargeable battery, when the potential difference between the positive electrode 41 of the battery cell 40 and the reference electrode 10 is greater than the third potential threshold, a battery heating current adjustment instruction with a heating current amplitude of zero is generated, the battery heating current of the rechargeable battery is adjusted, to adjust the battery heating current of the rechargeable battery to zero and actively reduce the battery heating current of the rechargeable battery, thereby further avoiding the damage to the active material of the positive electrode 41 of the rechargeable battery caused by the heating current of large magnitude. This allows for even heating of the rechargeable battery, thereby further improving the cycle life and safety of the battery.

When the potential difference between the positive electrode 41 of the battery cell 40 and the reference electrode 10 is greater than a fourth potential threshold and less than or equal to the third potential threshold, a battery heating current adjustment instruction is generated according to the third potential threshold, and the potential difference between the positive electrode 41 of the battery cell and the reference electrode 10. When the reference electrode 10 and the surface electrode 20 are located at various positions of the battery cell, the battery manager can detect multiple potential differences. When any one of the multiple potential differences is greater than the fourth potential threshold and less than or equal to the third potential threshold, a battery heating current adjustment instruction is generated according to the third potential threshold, and the potential difference between the positive electrode 41 of the battery cell 40 and the reference electrode 10.

In some embodiments of the present disclosure, when the potential difference between the positive electrode 41 of the battery cell 40 and the reference electrode 10 is greater than the fourth potential threshold and less than or equal to the third potential threshold, or when any one of the multiple potential differences is greater than the fourth potential threshold and less than or equal to the third potential threshold, the heating current amplitude corresponding to the battery heating current adjustment instruction is determined by a formula below:

$$I\_ac = I\_ac0 * f(s2)*(VP - E\_max),$$

where s2 is a second safety parameter, f(s2) is a function of s2, 1_ac is the heating current amplitude, I_ac0 is the initial heating current amplitude, VP is the potential difference between the positive electrode 41 of the battery cell 40 and the reference electrode 10, and E_max is the third potential threshold.

Notably, according to the safety requirement, f(s2) is a function of s2, having a value between 0-10, and can be set to a fixed value according to previous experiments, or determined by a look-up table method. During the self-heating process of the rechargeable battery, the heating current amplitude of the rechargeable battery is determined by the above formula according to the battery heating current adjustment instruction. This allows for even heating of the rechargeable battery, and further avoids the damage to the active material of the positive electrode 41 of the rechargeable battery caused by the heating current of large magnitude, thereby further improving the cycle life and safety of the battery.

In the description of the specification, the description with reference to the terms "an embodiment", "some embodiments", "exemplary embodiments", "example", "specific example", or "some examples" and so on means that specific features, structures, materials or characteristics described in connection with the embodiment or example are embraced in at least one embodiment or example of the present disclosure. In the specification, exemplary descriptions of the foregoing terms do not necessarily refer to the same embodiment or example. In addition, the described specific features, structures, materials, or characteristics may be combined in a proper manner in any one or more of the embodiments or examples.

Although the embodiments of the present disclosure have been shown and described, a person of ordinary skill in the art should understand that various changes, modifications, replacements and variations may be made to the embodiments without departing from the principles and spirit of the present disclosure, and the scope of the present disclosure is as defined by the appended claims and their equivalents.

## Claims

1. A self-heating control method for a rechargeable battery, the rechargeable battery comprising a battery cell (40), a separator (43) being provided between a positive electrode (41) and a negative electrode (42) of the battery cell, a reference electrode (10) being correspondingly provided at the separator, and a surface electrode (20) being correspondingly provided on the negative electrode surface of the battery cell, the method comprising:

   detecting the potential difference between the reference electrode and the surface electrode; and
   generating a charging current adjustment instruction according to the potential difference between the reference electrode and the surface electrode, and adjusting the charging current of the rechargeable battery according to the charging current adjustment instruction during the self-heating process of the rechargeable battery.

2. The self-heating control method for a rechargeable battery according to claim 1, wherein the step of generating a charging current adjustment instruction according to the potential difference between the reference electrode and the surface electrode comprises:

   when the potential difference between the reference electrode and the surface electrode is less than a first potential threshold, generating the charging current adjustment instruction with a charging current amplitude of zero;
   when the potential difference between the reference electrode and the surface electrode is greater than or equal to the first potential threshold and less than a second potential threshold, generating the charging current adjustment instruction according to the first potential threshold, and the potential difference between the reference electrode and the surface electrode.

3. The self-heating control method for a rechargeable battery according to claim 2, wherein when the potential difference between the reference electrode and the surface electrode is greater than or equal to the first potential threshold and less than the second potential threshold, the charging current amplitude corresponding to the charging current adjustment instruction is determined by a formula below:

$$I\_dc = I\_dc0 * f(s1)*(VN - E\_plating),$$

where s1 is a first safety parameter, f(s1) is a function of s1, I_dc is the charging current amplitude, I_dc0 is the initial charging current amplitude, VN is the potential difference between the reference electrode and the surface electrode, and E_plating is the first potential threshold.

4. The self-heating control method for a rechargeable battery according to any one of claims 1 to 3, wherein the first potential threshold is determined by:

 detecting the potential difference between the negative electrode of the battery cell and the reference electrode;
 acquiring a potential curve of the negative electrode at different charging rates according to the potential difference between the negative electrode of the battery cell and the reference electrode, and acquiring the relation between the lithium precipitation potential and the charging rate according to the potential curve of the negative electrode at different charging rates; and
 determining the first potential threshold according to the relation between the lithium precipitation potential and the charging rate.

5. The self-heating control method for a rechargeable battery according to any one of claims 2 and 3, when the potential difference between the reference electrode and the surface electrode is less than the first potential threshold, the method further comprising:

 detecting the potential difference between the positive electrode of the battery cell and the reference electrode; and
 generating a battery heating current adjustment instruction according to the potential difference between the positive electrode of the battery cell and the reference electrode, and adjusting the heating current amplitude of the rechargeable battery according to the battery heating current adjustment instruction during the self-heating process of the rechargeable battery.

6. The self-heating control method for a rechargeable battery according to any one of claims 1 and 5, wherein the step of generating a battery heating current adjustment instruction according to the potential difference between the positive electrode of the battery cell and the reference electrode comprises:

 when the potential difference between the positive electrode of the battery cell and the reference electrode is greater than a third potential threshold, generating a battery heating current adjustment instruction with a heating current amplitude of zero; and
 when the potential difference between the positive electrode of the battery cell and the reference electrode is greater than a fourth potential threshold and less than or equal to the third potential threshold, generating the battery heating current adjustment instruction according to the third potential threshold, and the potential difference between the positive electrode of the battery cell and the reference electrode.

7. The self-heating control method for a rechargeable battery according to claim 6, wherein when the potential difference between the positive electrode of the battery cell and the reference electrode is greater than the fourth potential threshold and less than or equal to the third potential threshold, the heating current amplitude corresponding to the battery heating current adjustment instruction is determined by a formula below:

$$I\_ac = I\_ac0 * f(s2)*(VP - E\_max),$$

where s2 is a second safety parameter, f(s2) is a function of s2, I_ac is the heating current amplitude, I_ac0 is the initial heating current amplitude, VP is the potential difference between the positive electrode of the battery cell and the reference electrode, and E_max is the third potential threshold.

8. A computer readable storage medium, storing a self-heating control program for a rechargeable battery thereon, the self-heating control program for a rechargeable battery, when executed by a processor, implementing the self-heating control method for a rechargeable battery according to any one of claims 1 to 7.

9. A battery manager, comprising a memory (1203), a processor (1201) and a self-heating control program for a rechargeable battery stored on the memory and able to run on the processor, the self-heating control program for a rechargeable battery, when executed by the processor, implementing the self-heating control method for a rechargeable battery according to any one of claims 1 to 7.

10. A self-heating control system for a rechargeable battery, comprising:

 a reference electrode, correspondingly provided at a separator between a positive electrode and a negative electrode in a battery cell of the rechargeable battery;

a surface electrode, correspondingly provided at the negative electrode surface of the battery cell; and

a battery manager, connected respectively to the reference electrode and the surface electrode, and configured to detect the potential difference between the reference electrode and the surface electrode; and generate a charging current adjustment instruction according to the potential difference between the reference electrode and the surface electrode, and adjust the charging current of the rechargeable battery according to the charging current adjustment instruction during the self-heating process of the rechargeable battery.

11. The self-heating control system for a rechargeable battery according to claim 10, wherein the reference electrode is electronically insulated from, but ionically conductive with the positive electrode and the negative electrode of the battery cell, and the surface electrode is in direct contact and electronic conduction with the negative electrode of the battery cell.

| | |
|---|---|
| The potential difference between the reference electrode and the surface electrode is detected | S01 |

A charging current adjustment instruction is generated according to the potential difference between the reference electrode and the surface electrode, and the charging current of the rechargeable battery is adjusted according to the charging current adjustment instruction during the self-heating process of the rechargeable battery | S02

FIG. 1

40

42
43
41

FIG. 2

41
43
42

10

20

FIG. 3

FIG. 4

FIG. 5

50

30

44    10    20    45

40

FIG. 6

1201

1203

Memory

Program

1204

Processor

Communication bus

1202

Communication
Interface

FIG. 7

## INTERNATIONAL SEARCH REPORT

| International application No. |
| --- |
| **PCT/CN2022/101475** |

### A.  CLASSIFICATION OF SUBJECT MATTER

H01M 10/615(2014.01)i

According to International Patent Classification (IPC) or to both national classification and IPC

### B.  FIELDS SEARCHED

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; DWPI; VEN; ENTXT; CNKI: 电池, 加热, 电流, 参比电极, 隔膜, 锂枝晶, 电位差, battery, heat, current, reference electrode, diaphragm, lithium dendrite, potential difference

### C.  DOCUMENTS CONSIDERED TO BE RELEVANT

| Category* | Citation of document, with indication, where appropriate, of the relevant passages | Relevant to claim No. |
| --- | --- | --- |
| Y | CN 112216908 A (DONGFENG LIUZHOU MOTOR CO., LTD.) 12 January 2021 (2021-01-12) <br> description, paragraphs 30-52 | 1-2, 4-6, 8-11 |
| Y | JP 2013175417 A (NIPPON SOKEN INC. et al.) 05 September 2013 (2013-09-05) <br> description, paragraphs 5-25, and figures 1-6 | 1-2, 4-6, 8-11 |
| Y | CN 112186307 A (CRRC QINGDAO SIFANG CO., LTD.) 05 January 2021 (2021-01-05) <br> description, paragraphs 6-36 | 1-2, 4-6, 8-11 |
| A | JP 2014075285 A (LITHIUM ION BATTERY TECHNOLOGY AND EVALUATION CENTER) 24 April 2014 (2014-04-24) <br> entire document | 1-11 |
| A | JP S63275949 A (NGK INSULATORS, LTD.) 14 November 1988 (1988-11-14) <br> entire document | 1-11 |
| A | CN 112433159 A (BEIJING INSTITUTE OF TECHNOLOGY) 02 March 2021 (2021-03-02) <br> entire document | 1-11 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **22 August 2022** | **02 September 2022** |

| Name and mailing address of the ISA/CN | Authorized officer |
| --- | --- |
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/101475**

| Patent document cited in search report | | | Publication date (day/month/year) | Patent family member(s) | | | Publication date (day/month/year) |
|---|---|---|---|---|---|---|---|
| CN | 112216908 | A | 12 January 2021 | None | | | |
| JP | 2013175417 | A | 05 September 2013 | None | | | |
| CN | 112186307 | A | 05 January 2021 | None | | | |
| JP | 2014075285 | A | 24 April 2014 | None | | | |
| JP | S63275949 | A | 14 November 1988 | JP | H07122626 | B2 | 25 December 1995 |
| CN | 112433159 | A | 02 March 2021 | CN | 112433159 | B | 22 July 2022 |

Form PCT/ISA/210 (patent family annex) (January 2015)

**REFERENCES CITED IN THE DESCRIPTION**

**Patent documents cited in the description**

- CN 202111074668